# EUROPÄISCHE PATENTSCHRIFT

(11) **EP 3 655 669 B1**
(45) Veröffentlichungstag und Bekanntmachung des Hinweises auf die Patenterteilung: **30.08.2023**
(21) Anmeldenummer: 18740586.5
(22) Anmeldetag: 13.07.2018
(51) Int. Cl.: F16B 25/00

(54) **HOLZSCHRAUBE**
WOOD SCREW
VIS À BOIS

(30) Priorität: 20.07.2017 DE 102017212439
(43) Veröffentlichungstag der Anmeldung: 27.05.2020
(73) Patentinhaber: SWG Schraubenwerk Gaisbach GmbH, 74638 Waldenburg (DE)
(72) Erfinder: WIMMER, Alois, 74545 Michelfeld (DE); SÜPPLE, Tobias, 74626 Bretzfeld (DE)
(74) Vertreter: Patentanwälte Ruff, Wilhelm, Beier, Dauster & Partner mbB
(86) Internationale Anmeldenummer: PCT/EP2018/069082
(87) Internationale Veröffentlichungsnummer: WO 2019/016092

(56) Entgegenhaltungen:
- FR-A5- 2 142 156
- US-A1- 2008 014 047

## Beschreibung

Die Erfindung betrifft eine Holzschraube mit einem Schaft, wobei der Schaft wenigstens abschnittsweise mit einem Gewinde versehen ist, mit einem Schraubenkopf an einem ersten Ende des Schafts, wobei der Schraubenkopf mit einer Antriebsausbildung versehen ist, und mit einer Schraubenspitze am zweiten Ende des Schafts, wobei die Schraubenspitze sich ausgehend von einem zylindrischen Abschnitt des Schafts bis zu dem punktförmigen zweiten Ende verjüngt und das Gewinde im Bereich der sich verjüngenden Schraubenspitze beginnt.

US 2008/0014047 A1 offenbart eine Schraube mit einem Schaft, dessen spitzer Endabschnitt geschossförmig ist.

FR 2 142 156 offenbart eine Holzschraube, deren spitzes Ende eine ogivale Form aufweist.

Mit der Erfindung soll eine Holzschraube hinsichtlich einer Verringerung der Spaltwirkung und einer Verringerung des Einschraubdrehmoments verbessert werden.

Erfindungsgemäß ist hierzu eine Holzschraube mit den Merkmalen von Anspruch 1 vorgesehen. Vorteilhafte Weiterbildungen der Erfindung sind in den Unteransprüchen angegeben.

Eine erfindungsgemäße Holzschraube weist einen Schaft, wobei der Schaft wenigstens abschnittsweise mit einem Gewinde versehen ist, einen Schraubenkopf an einem ersten Ende des Schafts, wobei der Schraubenkopf mit einer Antriebsausbildung versehen ist, und eine Schraubenspitze am zweiten Ende des Schafts auf, wobei die Schraubenspitze sich ausgehend von einem zylindrischen Abschnitt des Schafts bis zu dem punktförmigen zweiten Ende verjüngt, wobei die Schraubenspitze einen rotationssymmetrischen Grundkörper mit einer wenigstens abschnittsweise konvex gekrümmten Außenkontur aufweist.

Die Schraubenspitze weist also mit anderen Worten eine sogenannte ballistische Spitze oder Spitze in Geschossform auf. Die erfindungsgemäße Schraube kann dabei als selbstbohrende Schraube für Holzwerkstoffe, Holz und holzähnliche Materialien ausgebildet sein. Überraschenderweise dringt eine solche Holzschraube leichter in einen Holzwerkstoff ein als konventionelle Holzschrauben mit kegelförmiger Spitze und vor allem verringert sich durch eine solche Formgebung der Schraubenspitze die Spaltwirkung der Schraube. Die erfindungsgemäße Form der Schraubenspitze wird auch als Ogive bezeichnet und entsteht durch Rotieren einer gekrümmten Linie um die Mittellängsachse des Schraubenschafts. Die gekrümmte Linie kann dabei aus einer einzigen Kreislinie mit konstantem Radius oder mehreren Kreislinienabschnitten mit unterschiedlichem Radius gebildet sein. Im Rahmen der Erfindung kann die Schraubenspitze auch nur abschnittsweise mit einer konvex gekrümmten Außenkontur versehen sein. Weitere Abschnitte der Schraubenspitze können eine geradlinige Außenkontur oder gar eine konkav gekrümmte Außenkontur aufweisen. Vorzugsweise beträgt die Länge des Abschnitts mit konvex gekrümmter Außenkontur das Zweifache bis Vierfache, insbesondere das Dreifache der Länge der unteren Abschnitte der Schraubenspitze mit nicht konvex gekrümmter Außenkontur. Die erfindungsgemäße Holzschraube ist für Holzmaterialien aller Art und holzähnliche Materialien geeignet, beispielsweise Vollholz, Leimholz, insbesondere Baubuche, Schichtholz und Holzwerkstoffe wie Spanplatten und MDF-Platten. Das Gewinde erstreckt sich dabei üblicherweise bis zu dem punktförmigen zweiten Ende der Schraubenspitze, kann aber auch im Abstand von dem punktförmigen zweiten Ende enden.

In Weiterbildung der Erfindung ist am schraubenkopfseitigen Ende der Schraubenspitze ein umlaufender Absatz vorgesehen.

Ein solcher Absatz kann vorgesehen sein, wenn sich der Durchmesser des Schraubenschafts am schraubenkopfseitigen Ende der Schraubenspitze vergrößert. Ein solcher Absatz kann auch vorgesehen sein, wenn die Außenkontur der Schraubenspitze am schraubenkopfseitigen Ende der Schraubenspitze nicht parallel sondern in einem Winkel zur Mittellängsachse endet.

In Weiterbildung der Erfindung verläuft die Außenkontur der Schraubenspitze am schraubenkopfseitigen Ende der Schraubenspitze parallel zur Mittellängsachse des Schraubenschafts.

Eine solche Ausbildung des Übergangs zwischen Schraubenspitze und zylindrischem Abschnitt des Schraubenschafts kann den Eindringwiderstand der Holzschraube und damit das Einschraubmoment verringern.

In Weiterbildung der Erfindung ist vorgesehen, dass ein Krümmungsradius der Schraubenspitze zum punktförmigen Ende hin zunimmt.

Auf diese Weise kann das Einschraubverhalten der Schraube verbessert werden.

In Weiterbildung der Erfindung beträgt der Krümmungsradius am schraubenkopfseitigen Ende der Schraubenspitze das 0,5-fache oder weniger als das 0,5-fache des Krümmungsradius im Bereich des punktförmigen Endes der Spitze.

In Weiterbildung der Erfindung ist wenigstens im Bereich der Schraubenspitze wenigstens eine Rippe, insbesondere eine Fräsrippe, vorgesehen, wobei eine Höhe der Rippe in radialer Richtung kleiner ist als eine Höhe der Gewindeflanken des Gewindes.

Das Vorsehen von Rippen führt zu einer Verringerung der Spaltwirkung der Schraube und zu einem verringerten Einschraubdrehmoment. Im Rahmen der Erfindung können die Rippen als abgerundete Verdichterrippen oder als Fräsrippen mit scharfer Kante ausgebildet sein. Eine Verdichterrippe im Sinne der Erfindung bewirkt eine spanlose Bearbeitung, indem die Verdichterrippen das Holz an der Wandung des Lochs, das beim Eindrehen der Schraube entsteht, nach außen drängen und dadurch verdichten. Eine Fräsrippe im Sinne der Erfindung bewirkt eine spanende Bearbeitung der Wandung des Lochs, das beim Eindrehen der Schraube entsteht. Es wird im Sinne der Erfindung dabei nicht zwischen schneiden, fräsen oder auch schaben unterschieden, wesentlich ist, dass die Fräsrippen, die auch als Schabekanten bezeichnet werden könnten, eine spanende Bearbeitung des durch das Eindringen der Schraubenspitze erzeugten Lochs bewirken. Die Rippe kann dabei gemeinsam mit dem Gewinde am punktförmigen Ende der Schraubenspitze beginnen. Die Rippe und das Gewinde können aber gemeinsam und in Form lediglich einer einzigen linienförmigen Erhebung an der punktförmigen Spitze beginnen und erst im weiteren Verlauf, beispielsweise nach etwa 1 bis 2 mm, einen getrennten Verlauf nehmen.

In Weiterbildung der Erfindung ist die Höhe der Rippe in radialer Richtung kleiner als die Hälfte oder gleich der Hälfte der Höhe der Gewindeflanken.

Eine solche Ausbildung der Fräsrippen hat den gewünschten Effekt, die Spaltwirkung der Schraube und das Einschraubdrehmoment zu verringern, ohne dass die Haltekraft der Schraube nachteilig beeinflusst wird. Die Höhe der Rippen ist auch vom Kerndurchmesser im zylindrischen Abschnitt des Schraubenschafts, der sich üblicherweise bis zum Schraubenkopf erstreckt, abhängig. Um eine Verringerung des Einschraubmoments zu erzielen, müssen die Rippen einen Außendurchmesser definieren, der dem Kerndurchmesser in zylindrischem Abschnitt des Schraubenschafts entspricht oder sogar größer ist.

In Weiterbildung der Erfindung erstreckt sich die Rippe bis zum punktförmigen Ende der Schraubenspitze.

Die Wirkung der Rippe setzt damit unmittelbar nach dem Eindringen der Schraube in das Holzmaterial ein, da die Schraube keinen rippenfreien Endabschnitt aufweist. Die Rippe beginnt damit unmittelbar am punktförmigen Ende, kann aber in ihrem weiteren Verlauf durchaus unterbrochen sein, also in den Schraubenschaft eintauchen und damit scheinbar enden, um ein Stück weiter in Richtung auf den Schraubenkopf zu wieder aufzutauchen und scheinbar neu zu beginnen. Die Rippe folgt dabei einer einzigen Linie, die geradlinig oder gekrümmt sein kann.

In Weiterbildung der Erfindung sind mehrere Rippen vorgesehen, wobei ein Beginn der Rippen in Längsrichtung des Schraubenschafts gesehen versetzt ist.

Eine solche Ausbildung ermöglicht ein positives Einschraubverhalten, da die Wirkung der einzelnen Rippen nacheinander einsetzt.

In Weiterbildung der Erfindung verläuft die wenigstens eine Rippe wendelförmig um den Schraubenschaft.

Auf diese Weise kann eine sichere Spanabfuhr bewirkt werden.

In Weiterbildung der Erfindung weist die Rippe in einer Ebene senkrecht zur Mittellängsachse des Schraubenschafts einen dreieckförmigen Querschnitt auf.

Ein dreieckiger Querschnitt der Fräsrippen ist vergleichsweise einfach herzustellen, beispielsweise durch Walzen eines Rohlings, und sorgt für eine gute Fräswirkung oder Verdichterwirkung.

In Weiterbildung der Erfindung ist der dreieckförmige Querschnitt symmetrisch.

In Weiterbildung der Erfindung beträgt ein Flankenwinkel der Rippen zwischen 50 Grad und 70 Grad, insbesondere 60 Grad.

In Weiterbildung der Erfindung ist am schraubenkopfseitigen Ende der wenigstens einen Rippe ein kegelstumpfförmiger Absatz am Schraubenschaft vorgesehen ist, an dem sich ein Kerndurchmesser des Schraubenschafts vergrößert.

Eine solche Ausbildung des Schraubenschafts verbessert das Einschraubverhalten der Schraube und erleichtert die Herstellung, da ein Schraubenrohling mit konstantem Durchmesser verwendet werden kann. Dies deshalb, da nach dem Ende der Fräsrippe mehr Material im zylindrischen Kern des Schafts angeordnet wird.

Gemäß der Erfindung weist die Schraubenspitze einen ersten Abschnitt mit konvex gekrümmter Außenkontur auf, der von dem zylindrischen Abschnitt des Schraubenschafts ausgeht, und einen zweiten Abschnitt auf, der vom Ende des ersten Abschnitts ausgeht und sich bis zu dem punktförmigen zweiten Ende erstreckt.

Der erste Abschnitt der Schraubenspitze bewirkt den Übergang von der sich verjüngenden Schraubenspitze in den zylindrischen Schraubenschaft. In diesem Bereich kommen die vorteilhaften Eigenschaften der konvex gekrümmten Außenkontur besonders deutlich zum Tragen.

In Weiterbildung der Erfindung weist der zweite Abschnitt eine konvex gekrümmte Außenkontur auf oder ist kegelförmig.

Vorteilhafterweise ist die Länge dieses zweiten Abschnitts, der sich vom Übergang zwischen dem ersten Abschnitt und dem zweiten Abschnitt bis zum punktförmigen Ende erstreckt, deutlich kleiner als die Länge des ersten Abschnitts. Beispielsweise beträgt die Länge des zweiten Abschnitts lediglich die Hälfte bis ein Drittel der Länge des ersten Abschnitts. In einem solchen unmittelbaren Spitzenbereich kann die Außenkontur auch geradlinig oder sogar konkav gekrümmt ausgebildet sein. Vorteilhaft ist, wenn dieser im Vergleich zum ersten Abschnitt kurze zweite Abschnitt spitzer ausgeführt ist als der erste Abschnitt, so dass die Schraubenspitze leicht in das Holz eindringen kann.

Gemäß der Erfindung schließt die Außenkontur des ersten Abschnitts am Übergang zwischen erstem Abschnitt und zweitem Abschnitt einen größeren Winkel mit der Mittellängsachse des Schraubenschafts ein als die Außenkontur des zweiten Abschnitts am Übergang zwischen erstem Abschnitt und zweitem Abschnitt.

Bei einer solchen Ausgestaltung bildet sich am Übergang zwischen erstem Abschnitt und zweitem Abschnitt eine Rille aus. Auf diese Weise kann der sich bis zum punktförmigen zweiten Ende erstreckende zweite Abschnitt deutlich spitzer ausgeführt werden als der erste Abschnitt, was das Eindringverhalten und das Ansetzverhalten der Schraube positiv beeinflusst.

In Weiterbildung der Erfindung schließt die Außenkontur des zweiten Abschnitts über die gesamte Länge des zweiten Abschnitts bis zum punktförmigen zweiten Ende einen kleineren Winkel mit der Mittellängsachse des Schraubenschafts ein als die Außenkontur des ersten Abschnitts am Übergang zwischen erstem Abschnitt und zweitem Abschnitt.

Auf diese Weise kann der zweite Abschnitt vom Übergang zwischen erstem Abschnitt und zweitem Abschnitt bis zum punktförmigen Ende spitzer ausgeführt werden als der erste Abschnitt im Bereich des Übergangs. Dadurch entsteht eine sehr schlanke Spitze, die das Ansetzen und Eindringen der Schraube erleichtert.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der dargestellten und beschriebenen Ausführungsformen können dabei in beliebiger Weise und auch ohne weitere Merkmale, mit denen sie im Zusammenhang dargestellt und/oder beschrieben sind, miteinander kombiniert werden, ohne den Rahmen der Erfindung zu überschreiten. In den Zeichnungen zeigen:
- Fig. 1: eine Seitenansicht einer nicht erfindungsgemäßen Holzschraube,
- Fig. 2: eine abschnittsweise Seitenansicht der Holzschraube der Fig. 1,
- Fig. 3: eine Ansicht auf die Schnittebene A-A in Fig. 2,
- Fig. 4: eine gedachte Darstellung des Schraubenschafts der Holzschraube der Fig. 1 ohne Gewinde und Rippen zur Verdeutlichung der Spitzenform,
- Fig. 5: eine abschnittsweise Schnittansicht der Holzschraube der Fig. 1, wobei die Schnittebene parallel zur Mittellängsebene liegt,
- Fig. 6: eine abschnittsweise Ansicht der Holzschraube der Fig. 1 von schräg oben unter einem ersten Drehwinkel,
- Fig. 7: eine der Fig. 6 vergleichbare Darstellung unter einem zweiten Drehwinkel,
- Fig. 8: eine der Fig. 6 vergleichbare Ansicht unter einem dritten Drehwinkel,
- Fig. 9: eine der Fig. 6 vergleichbare Darstellung unter einem vierten Drehwinkel,
- Fig. 10: eine abschnittsweise Seitenansicht einer erfindungsgemäßen Holzschraube gemäß einer ersten Ausführungsform der Erfindung,
- Fig. 11: die Holzschraube der Fig. 10 unter einem anderen Drehwinkel um die Mittellängsachse der Schraube,
- Fig. 12: eine schematische abschnittsweise Darstellung des Schraubenschafts ohne Gewinde,
- Fig. 13: eine abschnittsweise Seitenansicht einer erfindungsgemäßen Holzschraube gemäß einer zweiten Ausführungsform der Erfindung und
- Fig. 14: eine abschnittsweise schematische Darstellung des Schraubenschafts der Schraube der Fig. 13 ohne Gewinde.

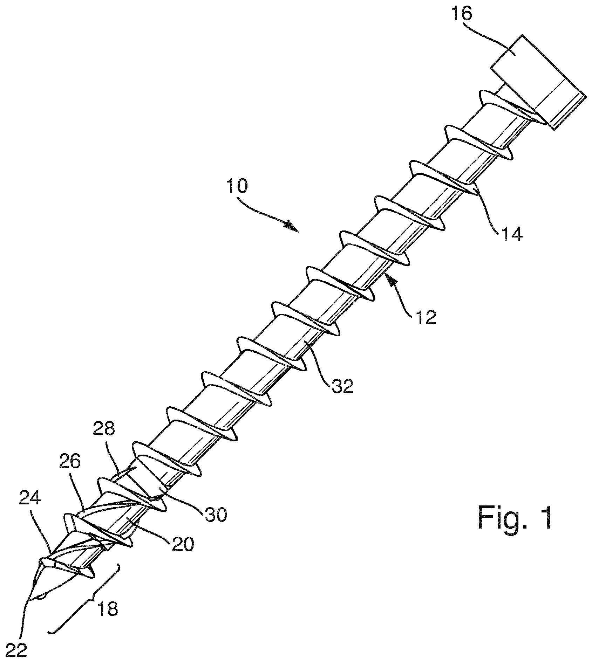

In Fig. 1 ist eine nicht erfindungsgemäße Holzschraube 10 mit einem Schraubenschaft 12 dargestellt, wobei der Schaft mit einem Gewinde 14 und einem Schraubenkopf 16 an einem ersten Ende des Schafts 12 versehen ist. Der Schraubenkopf 16 ist mit einer in Fig. 1 nicht erkennbaren Antriebsausbildung versehen, beispielsweise eine Vertiefung in Form eines Innensechskants. An einem, dem Schraubenkopf 16 gegenüberliegenden zweiten Ende des Schafts ist eine Schraubenspitze 18 vorgesehen. Die Schraubenspitze 18 verjüngt sich ausgehend von einem zylindrischen Abschnitt 20 des Schraubenschafts 12 bis zu einer punktförmigen Spitze 22.

Im Bereich der Schraubenspitze und im Bereich des ersten zylindrischen Abschnitts 20 sind neben dem Gewinde 12 noch Fräsrippen 24, 26, 28 vorgesehen, die sich jeweils wendelförmig um den Schaft 12 herumwinden. Im Bereich der Schraubenspitze 18 ist lediglich die Fräsrippe 24 vorgesehen. Im Bereich des ersten zylindrischen Abschnitts 20 sind dann drei Fräsrippen 24, 26, 28 vorgesehen. Im Rahmen der Erfindung können die Fräsrippen 24, 26, 28 abgerundet sein und werden dann als Verdichterrippen bezeichnet.

Die Fräsrippe 24 erstreckt sich bis zu dem punktförmigen Ende 22 der Schraubenspitze 18, wohingegen das Gewinde 14 kurz vor der punktförmigen Spitze 22 enden kann. Im Rahmen der Erfindung kann das Gewinde auch bis zur Spitze durchgehen. Das Gewinde 14 und die Fräsrippe 24 können einen gemeinsamen Beginn oder Ursprung haben. Die Fräsrippe 24 läuft von der punktförmigen Spitze 22 bis zu einem kegelstumpfförmigen Abschnitt 30, der sich an den ersten zylindrischen Abschnitt 20 anschließt. Die Fräsrippen 26, 28 beginnen hingegen in dem ersten zylindrischen Abschnitt 20 unmittelbar nach dem Ende der Schraubenspitze 18 und erstrecken sich jeweils bis in den kegelstumpfförmigen Abschnitt 30. An den kegelstumpfförmigen Abschnitt 30 schließt sich ein weiterer zylindrischer Abschnitt 32 des Schraubenschafts 12 an, der sich dann mit konstantem Durchmesser bis zum Schraubenkopf 16 erstreckt.

Die Schraubenspitze 18 weist eine ballistische Form oder Geschossform auf. Es ist in Fig. 1 zu erkennen, dass die Außenkontur der Schraubenspitze 18 von der punktförmigen Spitze 22 bis zu dem Übergang in den ersten zylindrischen Abschnitt 20 nach außen gekrümmt verläuft. Darüber hinaus ist die Schraubenspitze 18 so ausgestaltet, dass sich ein Durchmesser der Schraubenspitze 18 ausgehend von der punktförmigen Spitze 22 bis zum ersten zylindrischen Abschnitt 20 vergrößert. Am Übergang zwischen der Schraubenspitze 18 und dem ersten zylindrischen Abschnitt 20 verläuft die Außenkontur der Schraubenspitze 18 dann parallel zur Mittellängsachse des Schraubenschafts 12. Eine solche Form der Schraubenspitze 18 wird auch als Ogive, Geschoßform oder ballistische Form bezeichnet und entsteht durch die Rotation der konvex gekrümmten Außenkontur um die Mittellängsachse des Schraubenschafts 12. Diese Form der Schraubenspitze 18 sorgt überraschenderweise für ein sehr positives Einschraubverhalten der Holzschraube 10. Speziell ist die Spaltwirkung der Holzschraube 10 geringer als bei einer Holzschraube mit kegelförmiger Spitze und auch das Einschraubmoment ist gegenüber einer Holzschraube mit kegelförmiger Spitze verringert.

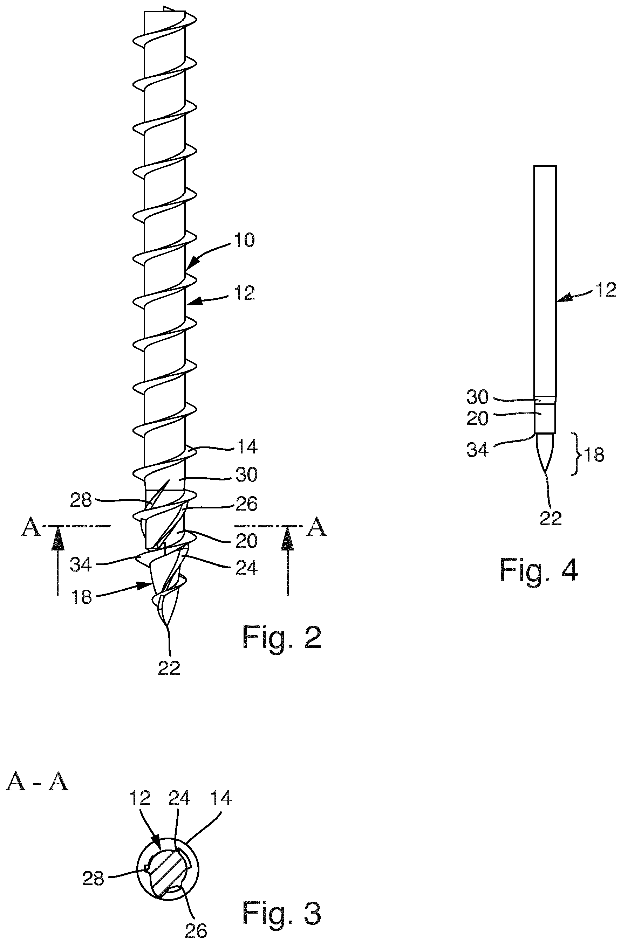

Die Darstellung der Fig. 2 zeigt eine abschnittsweise Seitenansicht der Holzschraube 10 der Fig. 1.

Zu erkennen ist in dieser Ansicht sehr gut, dass die Fräsrippe 24 sich bis zur punktförmigen Spitze 22 der Schraubenspitze 18 erstreckt. Die Fräsrippe 24, wie auch die Fräsrippen 26 und 28, erstreckt sich wendelförmig um den Schraubenschaft 12. Eine Steigung der Fräsrippe 24 ist dabei wesentlich größer als eine Steigung des Gewindes 14. Von der punktförmigen Spitze 22 bis zu dem kegelförmigen Abschnitt 30 weist die Fräsrippe 24 lediglich etwa eine Windung auf. Das Gewinde 14 legt über diese Strecke annähernd drei Windungen zurück.

Die Fräsrippen 26 und 28 beginnen jeweils am Übergang zwischen der Schraubenspitze 18 und dem ersten zylindrischen Abschnitt 20. Die Fräsrippen 26, 28 enden im kegelstumpfförmigen Abschnitt 30 und weisen jeweils nur etwa eine halbe Windung auf.

Am Übergang zwischen der Schraubenspitze 18 und dem ersten zylindrischen Abschnitt 20 ist ein Absatz 34 angeordnet, an dem sich in Richtung auf den Schraubenkopf zu der Durchmesser des Schraubenschafts 12 vergrößert. Dieser Absatz 34 kann im Rahmen der Erfindung entfallen. Auch durch den kegelstumpfförmigen Abschnitt 30 vergrößert sich der Durchmesser des Schraubenschafts 12 in Richtung auf den Schraubenkopf 16 zu. Der Durchmesser des Schraubenschafts 12 steigt also ausgehend von der punktförmigen Spitze 22 zunächst kontinuierlich an und nimmt dann im weiteren Verlauf des Schraubenschafts durch eine oder zwei Stufen noch zu.

Fig. 3 zeigt eine Ansicht auf die Schnittebene A-A in Fig. 2. Zu erkennen ist das Gewinde 14 sowie auch die drei Fräsrippen 24, 26, 28. Die Fräsrippen 24, 26, 28 weisen jeweils einen dreieckförmigen Querschnitt auf, wobei dieser dreieckförmige Querschnitt symmetrisch ausgebildet ist und einen Flankenwinkel von etwa 60° hat. Es ist gut zu erkennen, dass die radiale Erstreckung der Fräsrippen 24, 26, 28 wesentlich kleiner ist als die radiale Erstreckung der Gewindeflanken des Gewindes 14. Die radiale Erstreckung der Fräsrippen 24, 26, 28, also die Höhe der Fräsrippen 24, 26, 28, ist in radialer Richtung deutlich kleiner als die Hälfte der Höhe der Gewindeflanken des Gewindes 14 und beträgt bei der dargestellten Ausführungsform etwa ein Drittel der Höhe der Gewindeflanken des Gewindes 14. Die Fräsrippen 24, 26, 28 weisen eine solche Höhe auf, dass das aufgeweitete Loch, das beim Einschrauben entsteht, gleich groß ist oder größer ist als ein Kerndurchmesser des Schraubenschafts im zylindrischen Abschnitt 32.

Es ist Fig. 3 weiter zu entnehmen, dass die Fräsrippen 24, 26, 28 über den Umfang des Schraubenschafts 12 gesehen gleichmäßig voneinander beabstandet sind.

Fig. 4 zeigt eine gedachte Darstellung des Schraubenschafts 12 ohne das Gewinde 14 und ohne die Fräsrippen 24, 26, 28. Gut zu erkennen ist die spitzbogenartige Form der Schraubenspitze 18, die auch als Ogive oder Geschossform bezeichnet wird. Es ist zu erkennen, dass der Krümmungsradius der Außenkontur der Schraubenspitze 18 in Richtung auf die punktförmige Spitze 22 zu größer wird. Auch ist zu erkennen, dass die Außenkontur der Schraubenspitze 18 am Übergang zu dem Absatz 34 bzw. dann dem ersten zylindrischen Abschnitt 20 parallel zur Mittellängsachse des Schraubenschafts 12 verläuft. Der Krümmungsradius an dem in Fig. 4 unteren Ende der Schraubenspitze 18 beträgt mehr als das Doppelte des Krümmungsradius in dem Bereich, der von dem Absatz 34 ausgeht. Bei einem Durchmesser der Schraubenspitze 18 am Übergang zum Absatz 34 von 4 mm beträgt der Radius der Außenkontur in dem Bereich, der sich an den Absatz 34 anschließt, etwa 20 mm und in dem weiteren Verlauf, der dann an der punktförmigen Spitze 22 endet, etwa 50 mm. Die Schraubenspitze 18 ist bei der dargestellten Ausführungsform etwa 10 mm lang. Allgemein gesehen beträgt ein vorteilhaftes Längen-/Durchmesserverhältnis der Schraubenspitze 18 mindestens 2:1 bis zu 3:1.

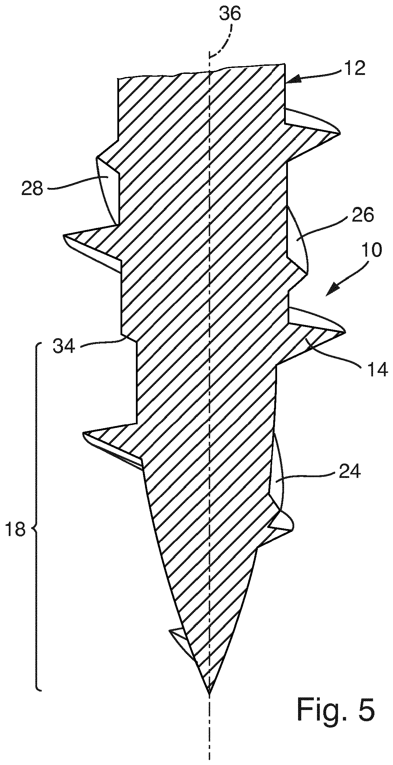

Die Darstellung der Fig. 5 zeigt eine abschnittsweise Schnittansicht der Holzschraube 10 der Fig. 2. Die Schnittebene verläuft dabei parallel zur Mittellängsachse des Schraubenschafts 12, wobei die Mittellängsachse in der Schnittebene enthalten ist.

Auch in dieser Darstellung ist gut die geschossartige oder ballistische Form der Schraubenspitze 18 zu erkennen. Gut zu erkennen sind ebenfalls die Gewindeflanken des Gewindes 14 und die Fräsrippen 24, 26, 28. Wie bereits ausgeführt wurde, verläuft die Außenkontur der Schraubenspitze 18 in dem sich an den Absatz 34 anschließenden Bereich parallel zur Mittellängsachse 36 des Schraubenschafts 12. Die Form der Schraubenspitze 18 entsteht durch Rotation der Außenkontur um die Mittellängsachse 36 und wird aufgrund des tangentialen Auslaufs der Außenkontur am Absatz 34 auch als Tangentenogive bezeichnet. Wenn der Absatz 34 entfällt, kann die Schraubenspitze 18 ebenfalls tangential in den zylindrischen Abschnitt 20 auslaufen.

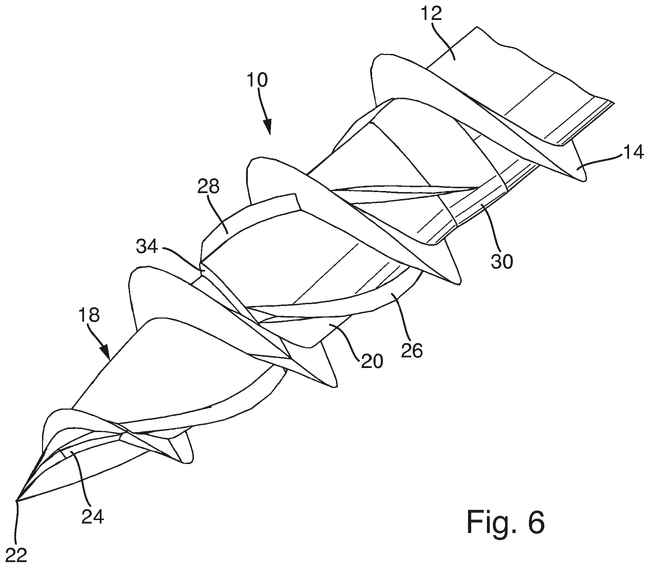

Die Darstellungen der Fig. 6 bis 9 zeigen jeweils abschnittsweise Darstellungen der Holzschraube 10 der Fig. 1. Zwischen den Fig. 6 bis 9 wird der Schraubenschaft 12 dabei jeweils ein Stück weit um die Mittellängsachse zum Betrachter hin gedreht.

In Fig. 6 ist zu erkennen, dass die Fräsrippe 24 sich bis zur punktförmigen Spitze 22 erstreckt. Weiter ist zu erkennen, dass die Fräsrippen 26, 28 unmittelbar nach dem Absatz 34 und somit am Beginn des ersten zylindrischen Abschnitts 20 beginnen. Die Fräsrippen 26, 28 und auch die Fräsrippe 24 enden dann im kegelstumpfförmigen Abschnitt 30, wobei die Höhe der Fräsrippen 24, 26, 28 im kegelstumpfförmigen Abschnitt 30 allmählich abnimmt.

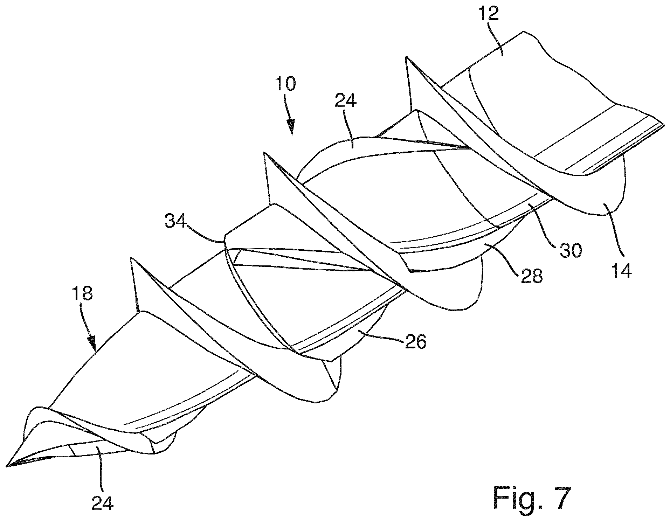

In Fig. 7 ist das Ende der Fräsrippe 24 im kegelstumpfförmigen Abschnitt 30 zu erkennen.

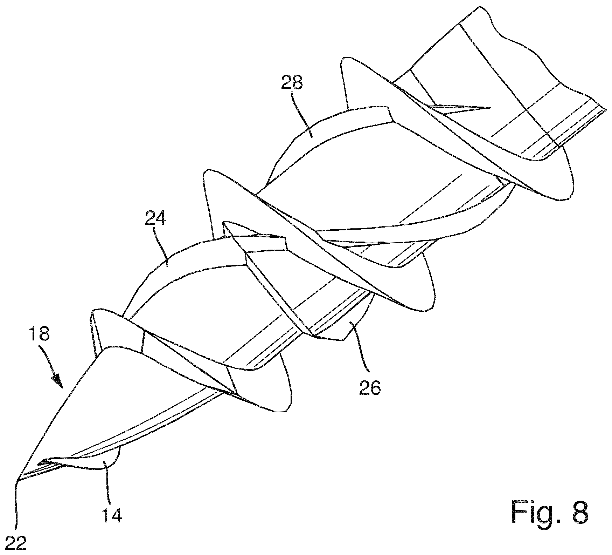

Fig. 8 zeigt das Ende des Gewindes 14 kurz vor der punktförmigen Spitze 22 der Schraubenspitze 18.

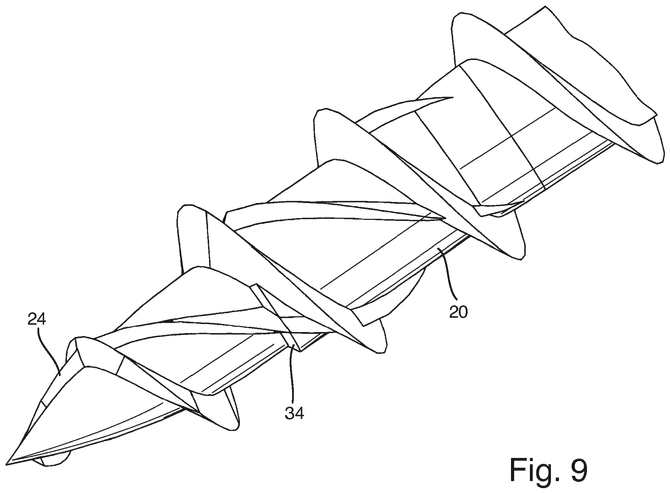

Fig. 9 lässt gut erkennen, wie die Fräsrippe 24 über den Absatz 34 in den ersten zylindrischen Abschnitt 20 einläuft. Aufgrund des Absatzes 34 verringert dabei die Fräsrippe 24 ihre Höhe im Verlauf des Absatzes 34, da eine radial außenliegende Außenkante der Fräsrippe 34 im Wesentlichen geradlinig über den Absatz 34 hinwegläuft.

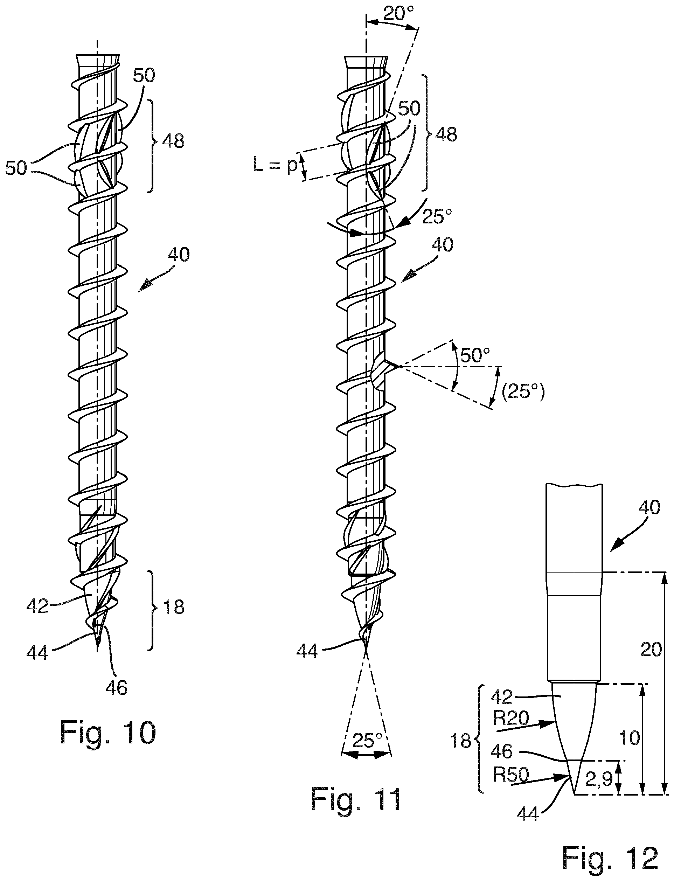

Fig. 10 zeigt eine abschnittsweise Darstellung einer Schraube 40 gemäß einer ersten Ausführungsform der Erfindung, wobei lediglich ein Schraubenkopf weggelassen wurde. Die Schraube 40 ist sehr ähnlich zur Schraube 10 der Fig. 1 ausgebildet, so dass lediglich die zur Schraube 10 unterschiedlichen Merkmale erläutert werden.

Im Unterschied zur Schraube 10 der Fig. 1 weist die Schraubenspitze 18 zwei Abschnitte auf. Ein erster Abschnitt 42 geht vom zylindrischen Schraubenschaft aus und erstreckt sich über etwa 2/3 der Länge der Schraubenspitze 18. Der erste Abschnitt 42 weist eine konvex gekrümmte Außenkontur auf.

Der zweite Abschnitt 44 erstreckt sich ausgehend vom ersten Abschnitt 42 bis zum punktförmigen zweiten Ende des Schraubenschafts. Die Länge des zweiten Abschnitts 44 beträgt lediglich etwa 1/3 der Länge der Schraubenspitze 18. Der zweite Abschnitt 44 weist ebenfalls eine konvex gekrümmte Außenkontur auf. Es ist aber bereits Fig. 10 zu entnehmen, dass der zweite Abschnitt 44 spitzer ausgebildet ist als der erste Abschnitt 42. Dies ergibt sich durch einen größeren Krümmungsradius im Bereich des zweiten Abschnitts 44 als im Bereich des ersten Abschnitts 42. Infolgedessen entsteht am Übergang zwischen dem ersten Abschnitt 42 und dem zweiten Abschnitt 44 eine Rille 46. Durch den deutlich größeren Krümmungsradius im Bereich des zweiten Abschnitts 44 kann der sich an das punktförmige zweite Ende des Schraubenschafts unmittelbar anschließende Bereich sehr spitz und infolgedessen mit kleinem Öffnungswinkel ausgebildet werden. Dadurch wird das Ansetzverhalten und das Eindringverhalten der Schraube 40 auch in hartem Holz oder in harten Holzmaterialien deutlich verbessert.

Im Unterschied zur Schraube 10 der Fig. 1 ist die Schraube 40 weiter mit einem Schaftfräser 48 versehen. Dieser Schaftfräser ist durch mehrere Schaberippen 50 gebildet, die sich jeweils zwischen zwei Gewindegängen des Gewindes der Schraube 40 erstrecken und eine im Querschnitt dreieckförmige Kontur haben. Die Schaberippen 50 des Schaftfräsers 48 weisen dadurch eine Schabekante auf. Die Höhe der Schaberippen 50 ist, ausgehend vom Kerndurchmesser des Schafts, geringer als die Höhe der Gewindeflanken des Gewindes. Die Schaberippen 50 gehen jeweils von einer oberen Gewindeflanke aus und erstrecken sich bis zur nächsten, unteren Gewindeflanke. Die Schaberippen 50 sind zur Mittellängsachse der Schraube geneigt, wobei die Schaberippen teilweise im Uhrzeigersinn gegen die Mittellängsachse und teilweise gegen den Uhrzeigersinn zur Mittellängsachse geneigt sind. Der Schaftfräser 48 erstreckt sich über eine Länge von etwa 3 Gewindegängen, siehe auch Fig. 11.

In Fig. 11 ist die Schraube 40 der Fig. 10 erneut und teilweise geschnitten dargestellt. Es sind einige Bemaßungen eingetragen, so der Spitzenwinkel des zweiten Abschnitts 44 von lediglich 25° und die Neigungswinkel der Schaberippen 50 des Schaftfräser 48, der zwischen +25° und - 20° zur Mittellängsachse liegt.

Fig. 12 zeigt zur Verdeutlichung eine abschnittsweise schematische Darstellung des Schraubenschafts. Es ist zu erkennen, dass der erste Abschnitt 42 der Schraubenspitze 18 eine konvex gekrümmte Außenkontur mit einem Krümmungsradius von 20 mm hat. Der zweite Abschnitt 44 hat ebenfalls eine konvex gekrümmte Außenkontur mit einem Krümmungsradius von 50 mm. Durch diesen, mehr als doppelt so großen Krümmungsradius im zweiten Abschnitt 44 im Vergleich zum ersten Abschnitt 42 ist der zweite Abschnitt 44 wesentlich spitzer ausgeführt als der erste Abschnitt 42. Darüber hinaus entsteht am Übergang zwischen dem ersten Abschnitt 42 und dem zweiten Abschnitt 44 die Rille 46.

Es ist Fig. 12 weiter zu entnehmen, dass die Schraubenspitze 18 insgesamt 10 mm lang ist und die Länge des zweiten Abschnitts 44 lediglich etwa 2,9 mm beträgt. Der erste Abschnitt 42 ist damit etwas mehr als doppelt so lang wie der zweite Abschnitt 44. Der zweite Abschnitt 44 nimmt nur etwa 1/3 der Länge der gesamten Schraubenspitze 18 ein.

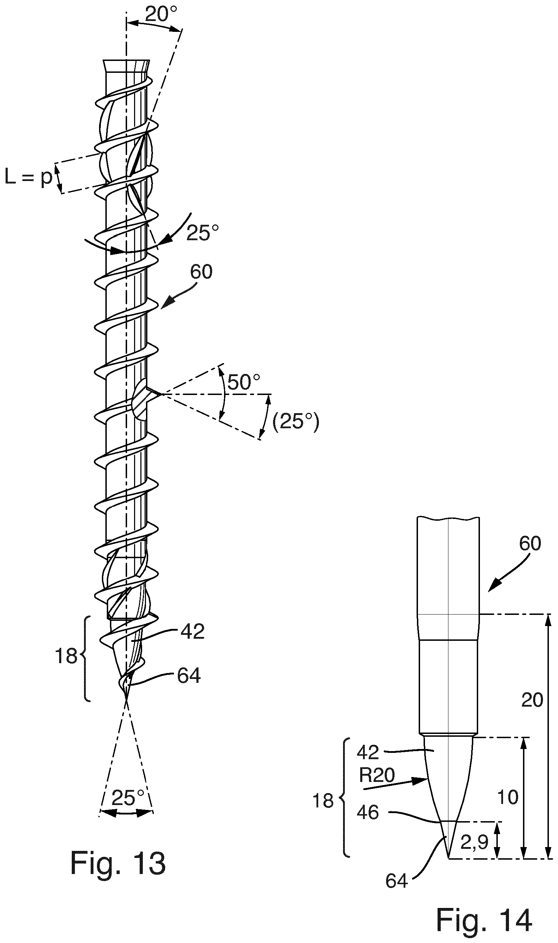

Fig. 13 zeigt abschnittsweise eine weitere erfindungsgemäße Schraube 60. Die Schraube 60 unterscheidet sich von der Schraube 40 der Fig. 10 und 11 lediglich durch die Ausbildung des zweiten Abschnitts 64 der Schraubenspitze 18. Im Unterschied zum zweiten Abschnitt 44 der Schraube 40 ist der zweite Abschnitt 64 kegelförmig ausgebildet und weist infolgedessen eine geradlinige Außenkontur auf.

Dies ist auch anhand der schematischen Darstellung der Fig. 14 zu erkennen. Am Übergang zwischen dem ersten Abschnitt 42 und dem zweiten Abschnitt 64 entsteht auch bei der Schraube 60 eine Rille 46.

## Patentansprüche

1. Holzschraube mit einem Schraubenschaft (12), wobei der Schraubenschaft (12) wenigstens abschnittsweise mit einem Gewinde (14) versehen ist, einem Schraubenkopf (16) an einem ersten Ende des Schraubenschafts (12), wobei der Schraubenkopf (16) mit einer Antriebsausbildung versehen ist, und einer Schraubenspitze (18) am zweiten Ende des Schraubenschafts (12), wobei die Schraubenspitze (18) sich ausgehend von einem zylindrischen Abschnitt (20) des Schraubenschafts (12) bis zu dem punktförmigen zweiten Ende verjüngt und das Gewinde (14) im Bereich der sich verjüngenden Schraubenspitze beginnt, wobei die Schraubenspitze (18) einen rotationssymmetrischen Grundkörper mit einer wenigstens abschnittsweise konvex gekrümmten Außenkontur aufweist, wobei die Schraubenspitze einen ersten Abschnitt mit konvex gekrümmter Außenkontur aufweist, der von dem zylindrischen Abschnitt (20) des Schraubenschafts (12) ausgeht, und einen zweiten Abschnitt aufweist, der vom Ende des ersten Abschnitts ausgeht und sich bis zu dem punktförmigen zweiten Ende erstreckt, **dadurch gekennzeichnet, dass** die Außenkontur des ersten Abschnitts am Übergang zwischen erstem Abschnitt und zweitem Abschnitt einen größeren Winkel mit der Mittellängsachse des Schraubenschafts einschließt als die Außenkontur des zweiten Abschnitts am Übergang zwischen erstem Abschnitt und zweitem Abschnitt.

2. Holzschraube nach Anspruch 1, **dadurch gekennzeichnet, dass** die Außenkontur der Schraubenspitze (18) am schraubenkopfseitigen Ende der Schraubenspitze (18) parallel zur Mittellängsachse (36) des Schraubenschafts (12) verläuft.

3. Holzschraube nach einem der vorstehenden Ansprüche, **dadurch gekennzeichnet, dass** ein Krümmungsradius der Schraubenspitze (18) zum punktförmigen Ende hin zunimmt.

4. Holzschraube nach Anspruch 3, **dadurch gekennzeichnet, dass** der Krümmungsradius am schraubenkopfseitigen Ende der Schraubenspitze (18) das 0,5 fache oder weniger als das 0,5 fache des Krümmungsradius im Bereich des punktförmigen Endes der Schraubenspitze (18) beträgt.

5. Holzschraube nach einem der vorsehenden Ansprüche, **dadurch gekennzeichnet, dass** das Gewinde (14) vor dem punktförmigen Ende der Schraubenspitze (18) endet.

6. Holzschraube nach einem der vorstehenden Ansprüche, **dadurch gekennzeichnet, dass** wenigstens im Bereich der Schraubenspitze (18) wenigstens eine Rippe, insbesondere eine Fräsrippe (24) vorgesehen ist, wobei eine Höhe der Rippe (24) in radialer Richtung kleiner ist als eine Höhe der Gewindeflanken des Gewindes (14).

7. Holzschraube nach Anspruch 6, **dadurch gekennzeichnet, dass** die Höhe der Rippe (24) in radialer Richtung kleiner als die Hälfte oder gleich der Hälfte der Höhe der Gewindeflanken ist.

8. Holzschraube nach Anspruch 6 oder 7, **dadurch gekennzeichnet, dass** die Rippe (24) sich bis zum punktförmigen Ende der Schraubenspitze (18) erstreckt.

9. Holzschraube nach einem der Ansprüche 6 bis 8, **dadurch gekennzeichnet, dass** mehrere Rippen (24, 26, 28) vorgesehen sind, wobei ein Beginn der Rippen (24, 26, 28) in Längsrichtung des Schraubenschafts (12) gesehen versetzt ist.

10. Holzschraube nach wenigstens einem der Ansprüche 6 bis 9, **dadurch gekennzeichnet, dass** die wenigstens eine Rippe (24, 26, 28) wendelförmig um den Schraubenschaft verläuft.

11. Holzschraube nach Anspruch 1, **dadurch gekennzeichnet, dass** der zweite Abschnitt eine konvex gekrümmte Außenkontur aufweist oder kegelförmig ist.

12. Holzschraube nach einem der vorstehenden Ansprüche, **dadurch gekennzeichnet, dass** die Außenkontur des zweiten Abschnitts über die gesamte Länge des zweiten Abschnitts bis zum punktförmigen zweitem Ende einen kleineren Winkel mit der Mittellängsachse des Schraubenschafts einschließt als die Außenkontur des ersten Abschnitts am Übergang zwischen erstem Abschnitt und zweitem Abschnitt.

## Claims

1. Wood screw having a screw shank (12), wherein the screw shank (12) is provided at least in portions with a thread (14), having a screw head (16) at a first end of the screw shank (12), wherein the screw head (16) is provided with a driving formation, and having a screw tip (18) at the second end of the screw shank (12), wherein the screw tip (18) tapers from a cylindrical portion (20) of the screw shank (12) up to the point-like second end and the thread (14) begins in the region of the tapering screw tip, wherein the screw tip (18) has a rotationally symmetrical base member with an at least partially convex-curved outer contour, wherein the screw tip has a first portion with a convex-curved outer contour which extends from the cylindrical portion (20) of the screw shank (12) and a second portion which leads from the end of the first portion and which extends as far as the point-like second end, **characterized in that** the outer contour of the first portion encloses a greater angle with the longitudinal centre axis of the screw shank, at the transition between the first portion and the second portion, than the outer contour of the second portion at the transition between the first portion and the second portion.

2. Wood screw according to claim 1, **characterized in that** the outer contour of the screw tip (18) extends at the end of the screw tip (18) on the screw head parallel with the longitudinal centre axis (36) of the screw shank (12) .

3. Wood screw according to either of the preceding claims, **characterized in that** a radius of curvature of the screw tip (18) increases towards the point-like end.

4. Wood screw according to claim 3, **characterized in that** the radius of curvature at the end of the screw tip (18) on the side of the screw head is 0.5 times or less than 0.5 times the radius of curvature in the region of the point-like end of the screw tip (18).

5. Wood screw according to any one of the preceding claims, **characterized in that** the thread (14) terminates before the point-like end of the screw tip (18).

6. Wood screw according to any one of the preceding claims, **characterized in that** at least in the region of the screw tip (18) at least one rib, in particular a milling rib (24), is provided, wherein a height of the rib (24) in a radial direction is less than a height of the thread flanks of the thread (14).

7. Wood screw according to claim 6, **characterized in that** the height of the rib (24) in a radial direction is less than half or equal to half of the height of the thread flanks.

8. Wood screw according to claim 6 or 7, **characterized in that** the rib (24) extends as far as the point-like end of the screw tip (18).

9. Wood screw according to any one of claims 6 to 8, **characterized in that** a plurality of ribs (24, 26, 28) are provided, wherein a beginning of the ribs (24, 26, 28) is offset when viewed in the longitudinal direction of the screw shank (12).

10. Wood screw according to at least one of claims 6 to 9, **characterized in that** the at least one rib (24, 26, 28) extends helically around the screw shank.

11. Wood screw according to claim 1, **characterized in that** the second portion has a convex-curved outer contour or is conical.

12. Wood screw according to any one of the preceding claims, **characterized in that** the outer contour of the second portion encloses over the entire length of the second portion as far as the point-like second end a smaller angle with the longitudinal centre axis of the screw shank than the outer contour of the first portion at the transition between the first portion and the second portion.

## Revendications

1. Vis à bois ayant une tige (12), la tige (12) étant pourvue au moins par sections d'un filetage (14), d'une tête de vis (16) à une première extrémité de la tige (12), la tête de vis (16) ayant une formation d'entraînement, et d'une pointe de vis (18) à la deuxième extrémité de la tige (12), la pointe de vis (18) se rétrécissant à partir d'une partie cylindrique (20) de la tige (12) jusqu'à la deuxième extrémité ponctuelle et le filetage (14) commençant dans la zone de la pointe de vis se rétrécissant, la pointe de vis (18) présentant un corps de base à symétrie de révolution avec un contour extérieur à courbure convexe au moins par sections, la pointe de vis présentant une première partie avec un contour extérieur à courbure convexe qui s'étend depuis la partie cylindrique (20) de la tige de vis (12) et une deuxième partie qui part de l'extrémité de la première partie et s'étend jusqu'à la deuxième extrémité ponctuelle, **caractérisée en ce que** le contour extérieur de la première partie à la transition entre la première partie et la deuxième partie forme un angle plus grand avec l'axe longitudinal central de la tige que le contour extérieur de la deuxième partie à la transition entre la première partie et la deuxième partie.

2. Vis à bois selon la revendication 1, **caractérisée en ce que** le contour extérieur de la pointe de vis (18) s'étend parallèlement à l'axe longitudinal central (36) de la tige (12) à l'extrémité de la pointe de vis (18) côté tête de vis.

3. Vis à bois selon l'une des revendications précédentes, **caractérisée en ce qu'**un rayon de courbure de la pointe de vis (18) augmente en direction de l'extrémité ponctuelle.

4. Vis à bois selon la revendication 3, **caractérisée en ce que** le rayon de courbure à l'extrémité de la pointe de vis (18) côté tête de vis est égal à 0,5 fois ou moins de 0,5 fois le rayon de courbure dans la zone de l'extrémité ponctuelle de la pointe de vis (18).

5. Vis à bois selon l'une des revendications précédentes, **caractérisée en ce que** le filetage (14) se termine avant l'extrémité ponctuelle de la pointe de vis (18) .

6. Vis à bois selon l'une des revendications précédentes, **caractérisée en ce qu'** au moins une nervure est prévue au moins dans la zone de la pointe de vis (18), en particulier une nervure de fraisage (24), une hauteur de la nervure (24) dans la direction radiale étant inférieure à une hauteur des flancs de filet du filetage (14).

7. Vis à bois selon la revendication 6, **caractérisée en ce que** la hauteur de la nervure (24) dans la direction radiale est inférieure ou égale à la moitié de la hauteur des flancs du filetage.

8. Vis à bois selon la revendication 6 ou 7, **caractérisée en ce que** la nervure (24) s'étend jusqu'à l'extrémité ponctuelle de la pointe de la vis (18).

9. Vis à bois selon l'une des revendications 6 à 8, **caractérisée en ce que** plusieurs nervures (24, 26, 28) sont prévues, un début des nervures (24, 26, 28) étant décalé, vu dans la direction longitudinale de la tige (12) .

10. Vis à bois selon au moins l'une des revendications 6 à 9, **caractérisée en ce que** l'au moins une nervure (24, 26, 28) s'étend en hélice autour de la tige.

11. Vis à bois selon la revendication 1, **caractérisée en ce que** la deuxième partie présente un contour extérieur à courbure convexe ou est conique.

12. Vis à bois selon l'une des revendications précédentes, **caractérisée en ce que** le contour extérieur de la deuxième partie forme, sur toute la longueur de la deuxième partie jusqu'à la deuxième extrémité ponctuelle, un angle plus petit avec l'axe longitudinal central de la tige que le contour extérieur de la première partie à la transition entre la première partie et la deuxième partie.
